# EUROPÄISCHE PATENTANMELDUNG

(11) **EP 4 653 724 A1**
(43) Veröffentlichungstag der Anmeldung: **26.11.2025**
(21) Anmeldenummer: 24178068.3
(22) Anmeldetag: 24.05.2024
(51) Int. Cl.: F16H 1/46

(54) **MEHRSTUFIGES PLANETENGETRIEBE MIT OPTIMIERTER RUECKDREHBARKEIT**

(71) Anmelder: Maxon International AG, 6072 Sachseln (CH)
(72) Erfinder: Rissler, Alexander, 79350 Sexau (DE)
(74) Vertreter: Grünecker Patent- und Rechtsanwälte PartG mbB

(57) **Zusammenfassung**

Die vorliegende Erfindung betriff ein Planetengetriebe mit einem Hohlrad und zumindest zwei Getriebestufen, wobei jede Getriebestufe ein Sonnenrad, zumindest ein Planetenrad sowie einen Planetenträger umfasst, wobei in jeder Getriebestufe das zumindest eine Planetenrad mit dem Sonnenrad und dem Hohlrad kämmt und an dem Planetenträger um eine relativ zum Planetenträger ortsfeste Planetenradachse drehbar gelagert angeordnet ist, wobei bei aufeinanderfolgenden Getriebestufen der Planetenträger der einen Getriebestufe mit dem Sonnenrad der anderen Getriebestufe drehfest miteinander verbunden oder integral ausgebildet ist, wobei ein Abtrieb durch den Planetenträger einer in einer Abtriebsrichtung letzten Getriebestufe ausgebildet ist. Erfindungsgemäß ist vorgesehen, dass das Planetengetriebe eine zentrale Lagerachse aufweist, auf der mehrere Getriebekomponenten, welche entweder den Abtrieb und eines der Sonnräder, wobei der Abtrieb durch den Planetenträger der in der Abtriebsrichtung letzten Getriebestufe ausgebildet ist, oder zumindest zwei der Sonnenräder umfassen, derart angeordnet sind, dass alle oder alle außer einer Getriebekomponente der mehreren Getriebekomponenten drehbar auf der zentralen Lagerachse gelagert sind.

## Beschreibung

Die vorliegende Erfindung bezieht sich auf ein mehrstufiges Planetengetriebe gemäß dem Oberbegriff des Anspruchs 1.

Ein gattungsgemäßes Planetengetriebe umfasst ein Hohlrad und zumindest zwei Getriebestufen, wobei jede Getriebestufe ein Sonnenrad, zumindest ein Planetenrad sowie einen Planetenträger umfasst, wobei in jeder Getriebestufe das zumindest eine Planetenrad mit dem Sonnenrad und dem Hohlrad kämmt und an dem Planetenträger um eine relativ zum Planetenträger ortsfeste Planetenradachse drehbar gelagert angeordnet ist, wobei bei aufeinanderfolgenden Getriebestufen der Planetenträger der einen Getriebestufe mit dem Sonnenrad der anderen Getriebestufe drehfest miteinander verbunden oder integral ausgebildet ist, wobei ein Abtrieb durch den Planetenträger oder das Sonnenrad einer in einer Abtriebsrichtung letzten Getriebestufe ausgebildet ist.

Derart bekannte Planetengetriebe neigen dazu bei unterschiedlichen dynamischen Situationen zu klemmen. Dieser Effekt verstärkt sich bei Planetengetrieben mit höherer Getriebestufenanzahl und steigenden Untersetzungsverhältnissen.

Die Aufgabe der vorliegenden Erfindung besteht daher darin, ein mehrstufiges Planetengetriebe bereitzustellen, das eine verbesserte Rückdrehbarkeit, insbesondere auch für Planetengetriebe mit hohen Untersetzungsverhältnissen, aufweist.

Die Aufgabe wird durch die Merkmale des unabhängigen Anspruchs 1 gelöst. Demnach liegt eine erfindungsgemäße Lösung der Aufgabe vor, wenn das Planetengetriebe eine zentrale Lagerachse aufweist, auf der mehrere Getriebekomponenten, welche entweder den Abtrieb und eines der Sonnräder, wobei der Abtrieb durch den Planetenträger der in der Abtriebsrichtung letzten Getriebestufe ausgebildet ist, oder zumindest zwei der Sonnenräder umfassen, derart angeordnet sind, dass alle oder alle außer einer Getriebekomponente der mehreren Getriebekomponenten drehbar auf der zentralen Lagerachse gelagert sind.

Durch die erfindungsgemäße Lösung kann die Ausrichtung und die Stabilität der Ausrichtung einzelner der Getriebestufen zueinander und relativ zum Hohlrad verbessert werden. Entsprechend werden mögliche Schrägstellungen verringert. Überraschenderweise hat sich gezeigt, dass sich dadurch die Rückdrehbarkeit des Planetengetriebes deutlich verbessert.

Als mehrere Getriebekomponenten sind eine Anzahl von mindestens zwei Getriebekomponenten zu verstehen.

Vorzugsweise sind die mehreren Getriebekomponenten Teil von aufeinanderfolgenden Getriebestufen oder Teil der in der Abtriebsrichtung letzten Getriebestufe. Dies vereinfacht die konstruktive Umsetzung.

Vorzugsweise sind alle oder alle außer einer Getriebekomponente der mehreren Getriebekomponenten drehbar mittels einer Gleitlagerung oder einer Wälzlagerung auf der zentralen Lagerachse gelagert.

Die jeweils einem Planentenrad zugehörige Planetenradachse ist eine geometrische Achse.

Vorteilhafte Ausgestaltungen der vorliegenden Erfindung sind Gegenstand der Unteransprüche.

In einer bevorzugten Ausführungsform der vorliegenden Erfindung ist eine Getriebekomponente der mehreren Getriebekomponenten drehfest mit der zentralen Lagerachse verbunden oder integral ausgebildet. Die Lagerachse dreht sich in diesem Fall mit der Getriebekomponente mit, ohne ein Drehmoment, abgesehen von geringsten Drehmomenten durch Reibungseffekte, auf eine weitere Getriebekomponente der mehreren Getriebekomponenten zu übertragen.

In einer besonders bevorzugten Ausführungsform der vorliegenden Erfindung ist der Abtrieb durch den Planetenträger der in der Abtriebsrichtung letzten Getriebestufe ausgebildet und die mehreren Getriebekomponenten umfassen den Abtrieb und das Sonnenrad der in der Abtriebsrichtung letzten Getriebestufe. Dadurch verbessert sich insbesondere die Ausrichtung und die Stabilität der Ausrichtung der in der Abtriebsrichtung letzten Getriebestufe zu der entgegen der Abtriebsrichtung daran anschließenden Getriebestufen und relativ zum Hohlrad. Es hat sich gezeigt, dass dies einen besonders großen positiven Effekt auf die Rückdrehbarkeit hat.

Gemäß einer besonders bevorzugten Ausführungsform umfassen die mehreren Getriebekomponenten den Abtrieb und zumindest zwei Sonnenräder. Dies verbessert die Rückdrehbarkeit.

In einer bevorzugten Ausführungsform umfassen die mehreren Getriebekomponenten alle Sonnenräder des Planetengetriebes. Dadurch ergibt sich ein besonders verbessert Rückdrehbarkeit.

Gemäß einer besonders bevorzugten Ausführungsform weist das Planetengetriebe zumindest zwei und besonders bevorzugt zumindest drei Getriebestufen auf und ein Antrieb ist durch das Sonnenrad einer in der Abtriebsrichtung ersten Getriebestufe ausgebildet, wobei die mehreren Getriebekomponenten alle Sonnenräder des Planetengetriebes außer den Antrieb umfasst. Das Untersetzungsverhältnis kann durch eine höhere Zahl der Getriebestufen gesteigert werden. Gleichzeitig ergibt sich eine besonders verbesserte Rückdrehbarkeit.

Gemäß einer weiteren besonders bevorzugten Ausführungsform weist die in der Abtriebsrichtung letzte Getriebestufe eine Stützscheibe auf, wobei das zumindest eine Planetenrad der in der Abtriebsrichtung letzten Getriebestufe zwischen der Stützscheibe und dem Planetenträger angeordnet ist und an dem Planetenträger und der Stützscheibe um die Planetenradachse drehbar gelagert angeordnet ist, wobei die Planetenradachse relativ zu dem Planetenträger und relativ zu der Stützscheibe ortsfest ist. Dadurch werden Verformungen bzw. Schrägstellungen der Planetenräder durch das eingeleitete Rückdrehmoment verringert, sodass die Rückdrehbarkeit verbessert wird.

Vorzugsweise weist jede Getriebestufe eine Stützscheibe auf, wobei das zumindest eine Planetenrad jeder Getriebestufe zwischen der Stützscheibe und dem Planetenträger angeordnet ist und an dem Planetenträger und der Stützscheibe um die Planetenradachse drehbar gelagert angeordnet ist, wobei die Planetenradachse relativ zu dem Planetenträger und relativ zu der Stützscheibe ortsfest ist. Dadurch werden Verformungen bzw. Schrägstellungen der Planetenräder in jeder Getriebestufe durch das eingeleitete Rückdrehmoment verhindert, sodass die Rückdrehbarkeit verbessert wird.

In einer besonders bevorzugten Ausführungsform der vorliegenden Erfindung sind die Planetenräder mittels einem oder mehreren Wälzlagern um die Planetenradachsen gelagert, wobei das oder die Wälzlager vorzugsweise als Nadellager oder Kugellager ausgebildet ist/sind. Dadurch kann die Reibung in der Lagerung der Planetenräder gesenkt werden, wodurch die Rückdrehbarkeit zusätzlich verbessert wird.

Vorzugsweise sind die Planetenräder koaxial auf einem Planetenradachsenelement, der dem jeweiligen Planetenrad zugeordnet ist, angeordnet, wobei das Planetenradachsenelement drehbar um die Planetenradachse relativ zu dem Planetenträger gelagert ist und/oder das Planetenrad drehbar um die Planetenradachse relativ zu dem Planetenradachsenelement gelagert ist. Falls das Planetenradachsenelement drehbar um die Planetenradachse relativ zu dem Planententräger gelagert ist, kann das Planetenrad drehfest mit dem Planetenradachsenelement verbunden oder integral ausgebildet sein. Das Planetenradachsenelement ist bevorzugt zylindrisch ausgeführt.

Vorzugsweise sind die Planetenräder koaxial auf einem Planetenradachsenelement, der dem jeweiligen Planetenrad zugeordnet ist, angeordnet, wobei das Planetenradachsenelement drehbar um die Planetenradachse relativ zu dem Planetenträger und zu der Stützscheibe gelagert ist und/oder das Planetenrad drehbar um die Planetenradachse relativ zu dem Planetenradachsenelement gelagert ist. Falls die Planetenradachsenelemente drehbar um die Planetenradachse relativ zu dem Planententräger und zu der Stützscheibe gelagert sind, kann das Planetenrad drehfest mit dem Planetenradachsenelement verbunden oder integral ausgebildet sein.

Gemäß einer bevorzugten Ausführungsform besteht die zentrale Lagerachse aus verschleissarmen Material, vorzugsweise aus einem gehärten Metall, einer gehärteten Metall-Legierung oder einem keramischen Werkstoff. Dadurch erhöht sich die Langlebigkeit des Planetengetriebes. Vorzugsweise besteht die zentrale Lagerachse aus dem keramischen Werkstoff Zirkonoxid.

In einer besonders bevorzugten Ausführungsform der vorliegenden Erfindung sind aufeinanderfolgende Getriebestufen derart voneinander in einer axialen Richtung des Planetengetriebes beabstandet ausgebildet, dass ein Abstand zwischen den Sonnenrädern, zwischen den Planetenrädern und dem Planetenträger und/oder zwischen dem Planetenträger und der Stützscheibe von aufeinanderfolgende Getriebestufen besteht. Der Abstand ist hierbei abhängig von der Getriebegröße und dem verwendeten Schmierstoff. Vorzugsweise beträgt der Abstand zumindest 0,05 mm, vorzugsweise zumindest 0,09 mm. Dadurch kann die Scherung von Schmiermitteln wie Fetten vermieden werden, wodurch das Reibmoment zwischen den Getriebestufen reduziert werden kann. Hierdurch verbessert sich dann wiederum die Rückdrehbarkeit.

In einer bevorzugten Ausführungsform wird der Abstand zwischen den Planetenrädern und dem Planetenträger und/oder zwischen dem Planetenträger und der Stützscheibe von aufeinanderfolgende Getriebestufen dadurch erzeugt, dass das Sonnenrad in axialer Richtung länger als die mit dem Sonnenrad in Kontakt stehenden, zughörigen Bauteile Planetenrad, Planetenträger und/oder Stützscheibe zusammen ausgeführt ist. Die Sonnenräder sind dabei in axialer Richtung an deren Stirnseiten aneinander anliegend ausgeführt. Hierdurch ist es auf einfache Weise möglich einen definierten Abstand zwischen den Planetenrädern und dem Planetenträger und/oder zwischen dem Planetenträger und der Stützscheibe von aufeinanderfolgende Getriebestufen einzustellen.

Gemäß einer bevorzugten Ausführungsform umfasst jede Getriebestufe zumindest drei Planetenräder, wobei jede Getriebestufe vorzugsweise drei oder vier Planetenräder umfasst. Auch dadurch verbessert sich die Rückdrehbarkeit und Langlebigkeit des Planetengetriebes. Weitervorzugsweise umfassen die in der Abtriebsrichtung letzte Getriebestufe vier Planetenräder und die weiteren Getriebestufe/n drei Planetenräder.

In einer besonders bevorzugten Ausführungsform der vorliegenden Erfindung ist das Planetengetriebe derart ausgebildet, dass die Untersetzung des Planetengetriebes größer als 1000:1, vorzugsweise größer als 2000:1, ist. Derartige Planetengetriebe profitieren insbesondere von der verbesserten Rückdrehbarkeit, sodass sich neue Verwendungszwecke für derartige Planetengetriebe ergeben.

Zudem ist die Erfindung auf einen elektrischen Antrieb mit einem Planetengetriebe gemäß einem der oberhalb beschriebenen Ausführungsbeispiele des erfindungsgemäßen Planetengetriebes gerichtet.

Nachfolgend werden vier Ausführungsbeispiel eines erfindungsgemäßen Planetengetriebes anhand von Zeichnungen näher erläutert.

In den Zeichnungen zeigen:
- Figur 1:: einen Längsschnitt durch ein erstes Ausführungsbeispiel eines erfindungsgemäßen Planetengetriebes,
- Figur 2:: einen Längsschnitt durch ein zweites Ausführungsbeispiel eines erfindungsgemäßen Planetengetriebes,
- Figur 3:: einen Längsschnitt durch ein drittes Ausführungsbeispiel eines erfindungsgemäßen Planetengetriebes, und
- Figur 4:: einen Längsschnitt durch ein viertes Ausführungsbeispiel eines erfindungsgemäßen Planetengetriebes.

In den folgenden Abbildungen sind gleiche Teile mit gleichen Bezugszeichen versehen. Sofern eine Figur Bezugszeichen enthält, auf die in der zugehörigen Figurenbeschreibung nicht explizit eingegangen wird, wird auf vorherige oder nachfolgende Figurenbeschreibungen verwiesen.

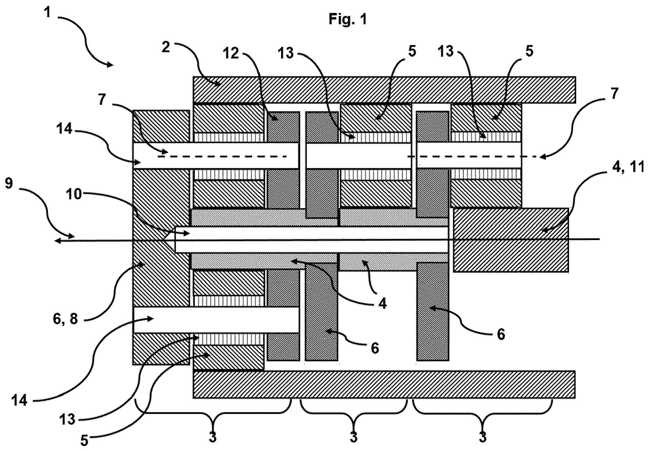

Die Figur 1 zeigt ein erstes Ausführungsbeispiel des erfindungsgemäßen Planetengetriebes 1. Das erste Ausführungsbeispiel ist ein Planetengetriebe 1 mit einem Hohlrad 2 und drei Getriebestufen 3, die in dem Hohlrad 2 angeordnet sind. Jede Getriebestufe 3 umfasst ein Sonnenrad 4, drei oder vier Planetenräder 5 sowie einen Planetenträger 6. Die Getriebestufen 3 sind derart angeordnet, dass die Planetenräder 5 der jeweiligen Getriebestufe 3 mit dem Sonnenrad 4 der jeweiligen Getriebestufe 3 und dem Hohlrad 2 kämmen und an dem Planetenträger 6 der jeweiligen Getriebestufe 3 um eine relativ zum Planetenträger 6 ortsfeste Planetenradachse 7 drehbar gelagert angeordnet sind. Hierfür sind die Planetenräder 5 jeweils koaxial auf einem Planetenradachsenelement 14, der dem jeweiligen Planetenrad 5 zugeordnet ist, angeordnet, wobei das Planetenradachsenelement 14 drehfest koaxial zur Planetenradachse 7 am Planetenträger 6 angeordnet ist und die Planetenräder 5 drehbar um die Planetenradachse 7 relativ zu dem Planetenradachsenelement 14 mittels einem Wälzlager 13 gelagert sind. Dabei ist bei aufeinanderfolgenden Getriebestufen 3 der Planetenträger 6 der einen Getriebestufe 3 mit dem Sonnenrad 4 der anderen Getriebestufe 3 drehfest miteinander verbunden.

Im ersten Ausführungsbeispiel ist ein Antrieb 11 durch das Sonnenrad 4 einer in einer Abtriebsrichtung 9 ersten Getriebestufe 3 ausgebildet und ist ein Abtrieb 8 durch den Planetenträger 6 einer in der Abtriebsrichtung 9 letzten Getriebestufe 3 ausgebildet.

Das Planetengetriebe 1 weist dabei eine zentrale Lagerachse 10 auf, auf der der Abtrieb 8 und alle Sonnenräder 4 außer dem Antrieb 11 derart angeordnet sind, dass der Abtrieb 8 drehfest mit der zentralen Lagerachse 10 verbunden ist und die Sonnenräder 4 außer dem Antrieb 11 drehbar auf der zentralen Lagerachse 10 gelagert sind. Dadurch kann die Ausrichtung der jeweiligen Getriebestufen 3 zueinander und zum Hohlrad 2 verbessert werden und die Rückdrehbarkeit verbessert sich. In einer alternativen Ausführung können der Abtrieb 8 und die Sonnenräder 4 außer dem Antrieb 11 drehbar auf der zentralen Lagerachse 10 gelagert sein.

Die in der Abtriebsrichtung 9 letzte Getriebestufe 3 weist vier Planetenräder 5 und zudem eine Stützscheibe 12 auf, wobei die Planetenräder 5 der in der Abtriebsrichtung 9 letzten Getriebestufe 3 zwischen der Stützscheibe 12 und dem Planetenträger 6 angeordnet sind und das jeweilige Planetenradachsenelement 14 an dem Planetenträger 6 und der Stützscheibe 12 drehfest angeordnet ist. Hierdurch werden Verformungen der Planetenradachsenelemente 14 und damit Schrägstellungen der Planetenräder 5 durch das eingeleitete Rückdrehmoment verhindert.

Zudem sind die Getriebestufen 3 in der Abtriebsrichtung 9, die der axialen Richtung des Planetengetriebes 1 entspricht, derart voneinander beabstandet angeordnet, dass sich die Planetenräder 5 und die Planetenträger 6 sowie die Planetenträger 6 und die Stützscheibe 12 von aufeinanderfolgende Getriebestufen 3 nicht berühren. Der Abstand zwischen den Planetenrädern 5 und dem Planetenträger 6 und/oder zwischen dem Planetenträger 6 und der Stützscheibe 12 von aufeinanderfolgende Getriebestufen 3 wird in dem ersten Ausführungsbeispiel dadurch erzeugt, dass das jeweilige Sonnenrad 4 in axialer Richtung länger als die mit dem Sonnenrad 4 in Kontakt stehenden, zughörigen Bauteile Planetenrad 5, Planetenträger 6 und/oder Stützscheibe 12 zusammen ausgeführt ist. Die Sonnenräder 5 sind dabei in axialer Richtung an deren Stirnseiten aneinander anliegend ausgeführt. Hierdurch ist auf einfache Weise möglich einen definierten Abstand zwischen den Planetenrädern 5 und dem Planetenträger 6 und/oder zwischen dem Planetenträger 6 und der Stützscheibe 12 von aufeinanderfolgende Getriebestufen 3 einzustellen. In einem nicht in den Figuren gezeigten Ausführungsbeispiel des erfindungsgemäßen Planetengetriebes 1 können aufeinanderfolgende Getriebestufen 3 derart voneinander in einer axialen Richtung des Planetengetriebes 1 beabstandet ausgebildet sein, dass ein Abstand zwischen den Sonnenrädern 4, zwischen den Planetenrädern 5 und dem Planetenträger 6 und/oder zwischen dem Planetenträger 6 und der Stützscheibe 12 von aufeinanderfolgende Getriebestufen 3 besteht. Der Abstand ist hierbei abhängig von der Getriebegröße und dem verwendeten Schmierstoff und beträgt vorzugsweise zumindest 0,05 mm, weiter vorzugsweise zumindest 0,09 mm.

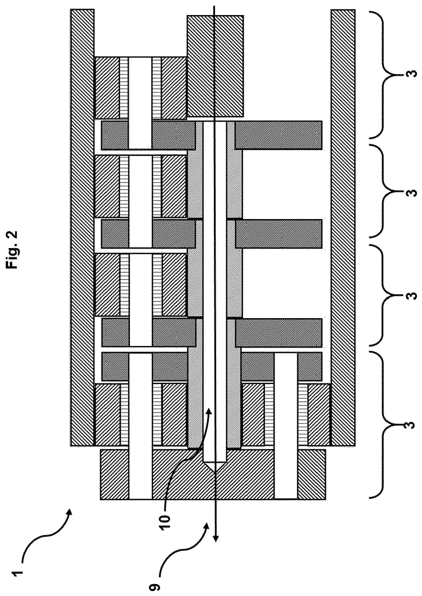

Figur 2 zeigt ein zweites Ausführungsbeispiel des erfindungsgemäßen Planetengetriebes 1. Das zweite Ausführungsbeispiel unterscheidet sich von dem ersten Ausführungsbeispiel darin, dass das Planetengetriebe 1 eine zusätzliche Getriebestufe 3 aufweist. Damit kann eine höhere Untersetzung erreicht werden.

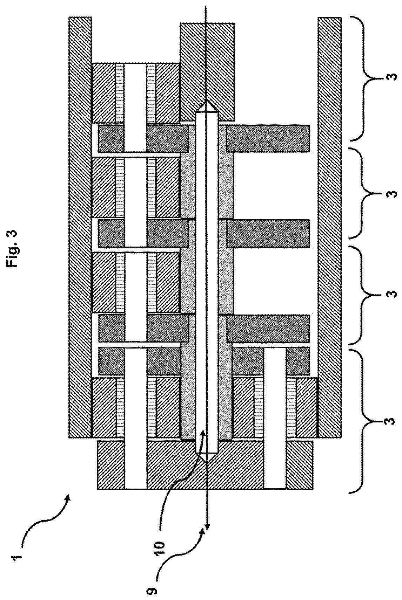

Figur 3 zeigt ein drittes Ausführungsbeispiel des erfindungsgemäßen Planetengetriebes 1. Das dritte Ausführungsbeispiel unterscheidet sich von dem zweiten Ausführungsbeispiel darin, dass auf der zentralen Lagerachse 10 der Abtrieb 8 und alle Sonnenräder 4 inklusive dem Antrieb 11 derart angeordnet sind, dass der Antrieb 8 und die Sonnenräder 4 drehbar auf der zentralen Lagerachse 10 gelagert sind.

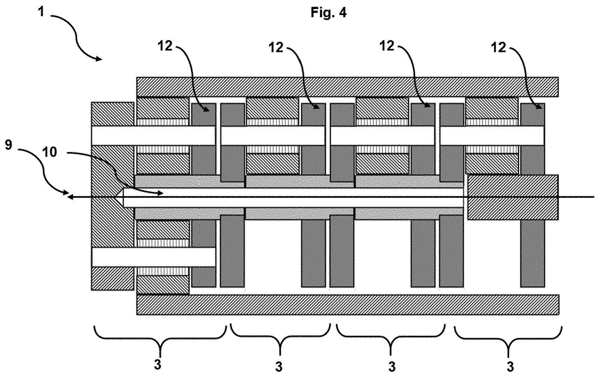

Figur 4 zeigt ein viertes Ausführungsbeispiel des erfindungsgemäßen Planetengetriebes 1. Das vierte Ausführungsbeispiel unterscheidet sich von dem zweiten Ausführungsbeispiel darin, dass jede Getriebestufe 3 eine Stützscheibe 12 aufweist, wobei die Planetenräder 5 der jeweiligen Getriebestufe 3 zwischen der jeweiligen Stützscheibe 12 und dem jeweiligen Planetenträger 6 angeordnet sind und das jeweilige Planetenradachsenelement 14 an dem Planetenträger 6 und der Stützscheibe 12 drehfest angeordnet ist.

### Liste der Bezugszeichen

- 1: Planetengetriebe
- 2: Hohlrad
- 3: Getriebestufe
- 4: Sonnenrad
- 5: Planetenrad
- 6: Planetenträger
- 7: Planetenradachse
- 8: Abtrieb
- 9: Abtriebsrichtung
- 10: Lagerachse
- 11: Antrieb
- 12: Stützscheibe
- 13: Wälzlager
- 14: Planetenradachsenelement

## Patentansprüche

1. Planetengetriebe (1) mit einem Hohlrad (2) und zumindest zwei Getriebestufen (3), wobei jede Getriebestufe (3) ein Sonnenrad (4), zumindest ein Planetenrad (5) sowie einen Planetenträger (6) umfasst, wobei in jeder Getriebestufe (3) das zumindest eine Planetenrad (5) mit dem Sonnenrad (4) und dem Hohlrad (2) kämmt und an dem Planetenträger (6) um eine relativ zum Planetenträger (6) ortsfeste Planetenradachse (7) drehbar gelagert angeordnet ist, wobei bei aufeinanderfolgenden Getriebestufen (3) der Planetenträger (6) der einen Getriebestufe (3) mit dem Sonnenrad (4) der anderen Getriebestufe (3) drehfest miteinander verbunden oder integral ausgebildet ist, wobei ein Abtrieb (8) durch den Planetenträger (6) oder das Sonnenrad (4) einer in einer Abtriebsrichtung (9) letzten Getriebestufe (3) ausgebildet ist, **dadurch gekennzeichnet, dass** das Planetengetriebe (1) eine zentrale Lagerachse (10) aufweist, auf der mehrere Getriebekomponenten, welche entweder den Abtrieb (8) und eines der Sonnräder, wobei der Abtrieb (8) durch den Planetenträger (6) der in der Abtriebsrichtung (9) letzten Getriebestufe (3) ausgebildet ist, oder zumindest zwei der Sonnenräder (4) umfassen, derart angeordnet sind, dass alle oder alle außer einer Getriebekomponente der mehreren Getriebekomponenten drehbar auf der zentralen Lagerachse (10) gelagert sind.

2. Planetengetriebe (1) nach Anspruch 1, **dadurch gekennzeichnet, dass** eine Getriebekomponente der mehreren Getriebekomponenten drehfest mit der zentralen Lagerachse (10) verbunden oder integral ausgebildet ist.

3. Planetengetriebe (1) nach Anspruch 1 oder 2, **dadurch gekennzeichnet, dass** der Abtrieb (8) durch den Planetenträger (6) der in der Abtriebsrichtung (9) letzten Getriebestufe (3) ausgebildet ist und die mehreren Getriebekomponenten den Abtrieb (8) und das Sonnenrad (4) der in der Abtriebsrichtung (9) letzten Getriebestufe (3) umfassen.

4. Planetengetriebe (1) nach einem der Ansprüche 1 bis 3, **dadurch gekennzeichnet, dass** die mehreren Getriebekomponenten den Abtrieb (8) und zumindest zwei Sonnenräder (4) umfassen.

5. Planetengetriebe (1) nach einem der Ansprüche 1 bis 4, **dadurch gekennzeichnet, dass** die mehreren Getriebekomponenten alle Sonnenräder (4) des Planetengetriebes (1) umfassen.

6. Planetengetriebe (1) nach einem der Ansprüche 1 bis 4, **dadurch gekennzeichnet, dass** das Planetengetriebe (1) zumindest drei Getriebestufen (3) aufweist und ein Antrieb (11) durch das Sonnenrad (4) einer in der Abtriebsrichtung (9) ersten Getriebestufe (3) ausgebildet ist, wobei die mehreren Getriebekomponenten alle Sonnenräder (4) des Planetengetriebes (1) außer den Antrieb (11) umfassen.

7. Planetengetriebe (1) nach einem der Ansprüche 1 bis 6, **dadurch gekennzeichnet, dass** die in der Abtriebsrichtung (9) letzte Getriebestufe (3) eine Stützscheibe (12) aufweist, wobei das zumindest eine Planetenrad (5) der in der Abtriebsrichtung (9) letzten Getriebestufe (3) zwischen der Stützscheibe (12) und dem Planetenträger (6) angeordnet ist und an dem Planetenträger (6) und der Stützscheibe (12) um die Planetenradachse (7) drehbar gelagert angeordnet ist, wobei die Planetenradachse (7) relativ zu dem Planetenträger (6) und relativ zu der Stützscheibe (12) ortsfest ist.

8. Planetengetriebe (1) nach einem der Ansprüche 1 bis 7, **dadurch gekennzeichnet, dass** jede Getriebestufe (3) eine Stützscheibe (12) aufweist, wobei das zumindest eine Planetenrad (5) jeder Getriebestufe (3) zwischen der Stützscheibe (12) und dem Planetenträger (6) angeordnet ist und an dem Planetenträger (6) und der Stützscheibe (12) um die Planetenradachse (7) drehbar gelagert angeordnet ist, wobei die Planetenradachse (7) relativ zu dem Planetenträger (6) und relativ zu der Stützscheibe (12) ortsfest ist.

9. Planetengetriebe (1) nach einem der Ansprüche 1 bis 8, **dadurch gekennzeichnet, dass** die Planetenräder (5) mittels einem oder mehreren Wälzlagern (13) um die Planetenradachsen (7) gelagert sind, wobei das oder die Wälzlager (13) vorzugsweise als Nadellager oder Kugellager ausgebildet ist/sind.

10. Planetengetriebe (1) nach einem der Ansprüche 1 bis 9, **dadurch gekennzeichnet, dass** die zentrale Lagerachse (10) aus verschleissarmen Material, vorzugsweise aus einem gehärten Metall, einer gehärteten Metall-Legierung oder einem keramischen Werkstoff, besteht.

11. Planetengetriebe (1) nach Anspruch 10, **dadurch gekennzeichnet, dass** die zentrale Lagerachse (10) aus dem keramischen Werkstoff Zirkonoxid besteht.

12. Planetengetriebe (1) nach einem der Ansprüche 1 bis 11, **dadurch gekennzeichnet, dass** aufeinanderfolgende Getriebestufen (3) derart voneinander in einer axialen Richtung des Planetengetriebes (1) beabstandet ausgebildet sind, dass ein Abstand zwischen den Sonnenrädern (4), zwischen den Planetenrädern (5) und dem Planetenträger (6) und/oder zwischen dem Planetenträger (6) und der Stützscheibe (12) von aufeinanderfolgende Getriebestufen (3) besteht, wobei der Abstand vorzugsweise zumindest 0.05 mm, weitervorzugsweise zumindest 0.1 mm, beträgt.

13. Planetengetriebe (1) nach einem der Ansprüche 1 bis 12, **dadurch gekennzeichnet, dass** jede Getriebestufe zumindest drei Planetenräder (5) umfasst, wobei jede Getriebestufe vorzugsweise drei oder vier Planetenräder (5) umfasst, wobei weiter vorzugsweise die in der Abtriebsrichtung (9) letzte Getriebestufe vier Planetenräder (5) und die weiteren Getriebestufe/n drei Planetenräder (5) umfassen.

14. Planetengetriebe (1) nach einem der Ansprüche 1 bis 13, **dadurch gekennzeichnet, dass** das Planetengetriebe (1) derart ausgebildet ist, dass die Untersetzung des Planetengetriebes (1) größer als 1000:1, vorzugsweise größer als 2000:1, ist.

15. Elektrischer Antrieb mit einem Planetengetriebe nach einem der Ansprüche 1 bis 14.
